# EUROPEAN PATENT APPLICATION

(11) **EP 3 296 620 A1**
(43) Date of publication of application: **21.03.2018**
(21) Application number: 16791928.1
(22) Date of filing: 15.03.2016
(51) Int. Cl.: F21S 8/00, A01G 9/20

(54) **PLANT GROWTH LAMP**

(30) Priority: 08.05.2015 CN 201510231170
(71) Applicant: Wu, Jian, Puning, Guangdong 515300 (CN)
(72) Inventor: Wu, Jian, Puning, Guangdong 515300 (CN)
(74) Representative: Bergmeier, Werner
(86) International application number: PCT/CN2016/076403
(87) International publication number: WO 2016/180078

(57) **Abstract**

Disclosed is a plant growth lamp, which comprises a lamp body (1), a drive power supply provided in the lamp body (1), an LED light-emitting body (2), and a heat dissipation portion (3), wherein the LED light-emitting body (2) comprises a substrate (4) and a plurality of LED lamp beads are provided on the substrate (4); the LED light-emitting body (2) is regulated by a spectrum controller to generate various regular pulse-type periodic spectrum light signals; and the LED lamp beads are connected to the heat dissipation portion (3) via the substrate (4). By means of the light irradiation of such a lamp, the growing speed of a plant can be greatly improved, and the heat dissipation of the plant growth lamp is effectively improved to prolong the service life of the plant growth lamp.

## Description

### TECHNICAL FIELD

The present invention relates to the technical field of lighting lamps and more particularly to a plant growth lamp.

### BACKGROUND

Light is an indispensable source of energy for photosynthesis of green plants. Only under light conditions can plants grow normally. Photosynthesis of plants refers to that plants use the chlorophyll to absorb solar energy, compound carbon dioxide and water into organic matter and further convert solar energy into chemical energy which can be stored, and release oxygen at the same time. Carbohydrates produced by photosynthesis are further transformed into starch, fat and the like for life activities. All in all, the influence of light on plants is of crucial importance. In order to promote the growth of plants, people will place lamps in the greenhouses or place lamps indoors. Due to the low light utilization rate of the lamps used, which cannot meet the requirements of the growth of plants, plants grow worse and worse. When plants are irradiated by lamp light which has a spectrum suitable for the need of plants, not only the growth of plants can be promoted, but also the quality of plants can be improved.

Photosynthetic pigments, moisture, biochemical composition and structure contained in plants influence the special spectral response of plants. Chlorophyll a, chlorophyll b, and carotenoid in a chloroplast can absorb the visible part of the sunlight, wherein the chlorophyll a and the chlorophyll b absorb red and blue region, while the carotenoid absorbs a blue region. Healthy plants have a lower reflectivity in the red and blue regions. Photosynthesis of plants starts from the red and blue light absorbed by the chlorophyll in the chloroplast, wherein the red and blue light comes from the visible light which includes red, orange, yellow, green, blue and purple light. Not all light is effective for photosynthesis of plants. The effective part is concentrated in the visible region. The most effective part is the red and blue light, and the chlorophyll in these two regions has relatively large absorption value. The red light not only helps to the synthesis of plant carbohydrates, but also can accelerate the development of long-day plants, while the blue light accelerates the development of short-day plants and promotes the synthesis of proteins and organic acids.

However, conventional bulbs and sodium lamps used in the prior art have a high power cost. Color temperatures of the conventional bulbs and the sodium lamps are still different from that of the natural light. Mercury lamps produce a wavelength of 313 nm to 430 nm, thus the mercury lamps do not generate the red light. The sodium lamps produce a wavelength of 565nm, thus the sodium lamps do not produce blue light. When the conventional bulbs and the sodium lamps are used for irradiating plants at the same time, the growth efficiency of plants is not high since the conventional irradiating light does not contain a lot of red and blue light.

In recent years, the LED plant growth lamp, as one of the light sources to promote the plant growth, is widely used in various stages of the growth of plants. At present, the conventional LED plant growth lamp has been greatly improved in terms of the production process. However, due to the limitation of the wavelength of LED luminaires and the limitation of the proportion of LED luminaires with different wavelengths, the conventional LED plant growth lamp slowly promote plant growth and the promoting effect is not obvious. Moreover, the heat of the lamp cannot be effectively dissipated due to the overtemperature during working process, thus leading to serious lumen depreciation of the lamp, and influencing the service life of the lamp.

### SUMMARY OF THE INVENTION

The main technical problem to be solved by the present invention is to provide a plant growth lamp, and the growth rate of plants can be greatly improved by the light irradiation of the lamp. Another objective of the present invention is to effectively solve the problem such as poor heat dissipation and short service life of the existing plant growth lamp.

In order to solve the above technical problem, the technical solution adopted by the present invention is as follows:
A plant growth lamp is provided, which comprise a lamp body, and a driving power supply, an LED luminary and a heat dissipation part provided inside the lamp body. The LED luminary comprises a substrate, and a plurality of LEDs provided on the substrate. The LED luminary is controlled by a spectrum controller to generate various regular pulsed periodic spectral light signals, and the LEDs are connected with the heat dissipation part via the substrate.

Further, the LED luminary is regulated and controlled by the spectrum controller to glow in following order: red light; red, green, blue light; red, orange, yellow, green, cyan, blue, purple light; blue light; red light; red, green, blue light; red, orange, yellow, green, cyan, blue, purple light; all the light is extinguished after one scan period, and then the above-described pulse scan is repeated.

Further, the heat dissipation part comprises a circular cylinder with an inner hollow structure and a plurality of cooling fins distributed around the periphery of the circular cylinder, and the cooling fins are bifurcated.

Further, the lamp body is provided with a plurality of heat dissipation holes, and the heat dissipation holes are elongated through holes.

Further, the substrate is an aluminum substrate and the substrate is in close contact with one end face of the heat dissipation part.

Further, the plant growth lamp further comprises a front cover, and a transparent member is provided at a front end of the lamp body via the front cover. A sealing ring is provided on a contact surface between the transparent member and the front cover.

In comparison with the prior art, the beneficial effects of the present invention are as follows:
The new-type LED plant growth lamp of the present invention adopts a spectrum controller to regulate and control the LED luminary to generate various regular pulsed periodic spectral light signals. The arrangement of such spectrum and the reasonable irradiation period can greatly promote the growth rate of plants. It has been proved by experiment that the growth rate of plants is up to five times of the normal growth rate, and that the effect is remarkable.

The new-type LED plant growth lamp of the present invention can greatly improve its heat dissipation performance, and ensure its normal operation and prolong the service life of the lamp, by providing a reasonable number of elongated through holes at the lamp body and improving the structure of the heat dissipation part.

### BRIEF DESCRIPTION OF THE DRAWINGS

- **FIG. 1**: is a schematic structural view of the present invention;
- **FIG. 2**: is a sectional view of FIG. 1; and
- **FIG. 3**: is a schematic structural view of a part of a heat dissipation portion from a viewing angle.

1. lamp body, 2. LED luminary, 3. heat dissipation part, 31. circular cylinder, 32. cooling fin, 4. substrate, 5. heat dissipation hole, 6. front cover, 7. transparent member

### DETAILED DESCRIPTION OF THE PREFERED EMBODIMENT

The mechanism and working principle of the present invention is described in detail in the following with reference to the accompanying drawings. In order to better illustrate the embodiments of the present invention, some parts are omitted, zoomed in or out in the accompanying drawings, but do not represent the actual size of the product. It is understandable for those skilled in the art that some known structures and the description thereof may be omitted in the accompanying drawings. The same or similar reference numerals correspond to the same or similar components.

### Embodiment 1

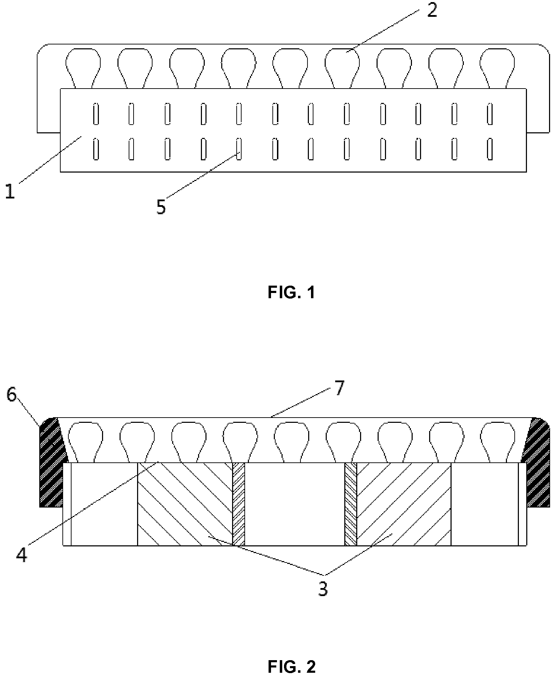

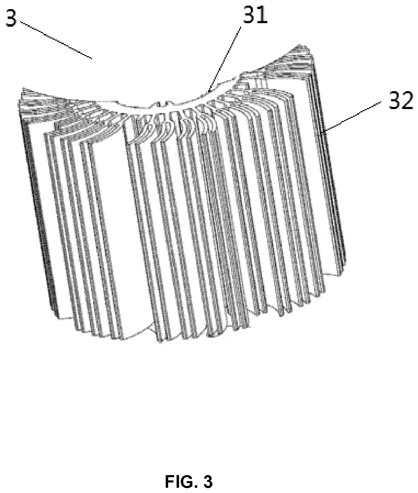

As shown in FIG. 1, FIG. 2 and FIG. 3, a LED plant growing lamp of the present invention comprise a lamp body 1, and a driving power supply, an LED luminary 2 and a heat dissipation part 3 provided inside the lamp body 1. The LED luminary 2 comprises a substrate 4 and a plurality of LEDs provided on the substrate 4. The LED luminary 2 is regulated and controlled by a spectrum controller to generate various regular pulsed periodic spectral light signals. The LEDs are connected with the heat dissipation part 3 via the substrate 4. The LED luminary 2 is regulated and controlled by the spectrum controller to glow in following order: red light (0.4 seconds) → red, green, blue light (0.4 seconds) → red, orange, yellow, green, cyan, blue, purple light (0.4 seconds) → blue light (0.4 seconds) → red light(0.4 seconds) → red, green, blue light (0.4 seconds) → red, orange, yellow, green, cyan, blue, purple light (0.4 seconds). Cross forms and combination forms of different light are generated according to the changes of this order; all the light is extinguished (0.8 seconds) after one scan period to form a light reaction and a dark reaction periodic time to generate a pulse spectrum period of 3.6 seconds; the above-described pulsed scan is repeated again. According to the above-described order, the LED luminary emits red, green and blue light signals and combined light signals to irradiate plants, so as to achieve the purpose of effectively promoting the rapid growth of plants. The arrangement of such spectrum and the reasonable irradiation period can greatly promote the growth rate of plants. It has been proved by experiment that the growth rate of plants is up to five times of the normal growth rate, and that the effect is remarkable. The heat dissipation part 3 comprises a circular cylinder 31 with an inner hollow structure, which is conducive to the heat transfer, thereby improving the heat dissipation efficiency, and a plurality of cooling fins 32 distributed around the periphery of the circular cylinder 31. The cooling fins 31 are bifurcated. Such bifurcation structure can greatly increase the surface area of the heat dissipation part 3 and air ducts can be formed by gaps between the cooling fins 31, which are conducive to take away heat. The lamp body is provided with a plurality of heat dissipation holes 5, and the heat dissipation holes 5 are elongated through holes, which greatly improves the discharge efficiency of the heat from the interior of the lamp. The substrate is made of aluminum material with better heat dissipation performance. The substrate 4 is arranged to be in close contact with one end face of the heat dissipation part 3 to ensure good heat transfer between the aluminum substrate 4 and the dissipation part 3. The plant growth lamp further comprises a front cover 6, and a transparent member 7 is provided at a front end of the lamp body via the front cover 6. The transparent member 7 plays a protective role on the parts inside the lamp on one hand, and has function of light distribution for the light source inside the lamp on the other hand. In order to ensure its durability, transparent tempered glass can be selected and used as the transparent member 7. A sealing ring is provided on a contact surface between the transparent member, and the sealing ring can play a sealing role to improve the protection level of the lamp.

Practical examples of the present invention:
Test 1: 12 parts of Chinese kale harvested, which passed the sensory test according to agricultural industry standards NY/T428-2000 and NY5193-2002, are divided into four groups. Each group includes 3 parts. One group is placed in a darkroom mounted with incandescent lamp; one group is placed in natural light or glass greenhouse; one group is placed in a device inside which an ordinary plant growth lamp is provided; one group is placed in a device inside which the above-described plant growth lamp is provided. These four groups are irradiated by light signals. Except that the light conditions are different for these four groups of Chinese kale samples, other conditions, such as water, air (25 °C), humidity (85%) and so on, are completely the same. During the processing process, observation and examination are conducted on the growth state of Chinese kale samples every 6 hours. Upon examination after 48 hours, it is found that: (a) The Chinese kale under incandescent lamp light condition comes out to be dry, yellow and withered; (b) The Chinese kale under natural light condition grows normally by 1 cm; (c) The Chinese kale irradiated by the ordinary plant growth lamp grows by 3 cm; (d) The Chinese kale irradiated by the plant growth lamp of the present invention grows by 5 cm, and grows tall and straight with bright green leaves.

Test results: The growth effect of Chinese kale of the test group with the plant growth lamp of the present invention is obviously better than that of other control groups. The arrangement of such spectrum and the reasonable irradiation period can greatly promote the growth rate of plants. It has been proved by experiment that the growth rate of plants is up to five times of the normal growth rate, and that the effect is remarkable.

Apparently, the above-described embodiments of the present invention are just embodiments for describing the present invention clearly, but not limitation to the implementations of the present invention. For those having ordinary skill in the art, variations or changes in different forms can be made on the basis of the above description. All of the implementations should not and could not be exhaustive herein. Any amendments, equivalent replacements and improvement made within the spirit and principle of the present invention shall all be included within the scope of protection of the claims of the present invention.

## Claims

1. A plant growth lamp, comprising a lamp body, and a driving power supply, an LED luminary and a heat dissipation part provided inside the lamp body, **characterized in that**, the LED luminary comprises a substrate and a plurality of LEDs provided on the substrate, the LED luminary being regulated and controlled by a spectrum controller to generate various regular pulsed periodic spectral light signals, the LEDs being connected with the heat dissipation part via the substrate.

2. The plant growth lamp according to claim 1, wherein the substrate is in close contact with one end face of the heat dissipation part.

3. The plant growth lamp according to claim 1, wherein the heat dissipation part comprises a circular cylinder with an inner hollow structure and a plurality of cooling fins distributed around the periphery of the circular cylinder.

4. The plant growth lamp according to claim 4, wherein the cooling fins are bifurcated.

5. The plant growth lamp according to claim 1, wherein the lamp body is provided with a plurality of heat dissipation holes.

6. The plant growth lamp according to claim 5, wherein the heat dissipation holes are elongated through holes.

7. The plant growth lamp according to claim 1, wherein the substrate is an aluminum substrate.

8. The plant growth lamp according to any one of claims 1 to 7, wherein the plant growth lamp further comprises a front cover, a transparent member being provided at a front end of the lamp body via the front cover.

9. The plant growth lamp according to claim 8, wherein a sealing ring is provided on a contact surface between the transparent member and the front cover.
